# EUROPEAN PATENT APPLICATION

(11) **EP 3 771 254 A1**
(43) Date of publication of application: **27.01.2021**
(21) Application number: 18919938.3
(22) Date of filing: 25.05.2018
(51) Int. Cl.: H04W 48/00, H04L 12/26

(54) **ACCESS CONTROL METHOD AND DEVICE, AND READABLE STORAGE MEDIUM**

(71) Applicant: HUAWEI TECHNOLOGIES CO., LTD., Shenzhen, Guangdong 518129 (CN)
(72) Inventor: HUANG, Guogang, Shenzhen, Guangdong 518129 (CN); LI, Yunbo, Shenzhen, Guangdong 518129 (CN); XU, Han, Shenzhen, Guangdong 518129 (CN)
(74) Representative: Pfenning, Meinig & Partner mbB
(86) International application number: PCT/CN2018/088455
(87) International publication number: WO 2019/222999

(57) **Abstract**

This application relates to the field of communications technologies and discloses an access control method and apparatus, and a readable storage medium. In the present disclosure, a first functional entity on a MAP network sends a control message to a second functional entity on the MAP network. Because the control message includes one or more first TLV messages, and the first TLV messages carry control information, the second functional entity can perform a related operation based on the control information after receiving the control message sent by the first functional entity. In this way, the first functional entity controls the second functional entity. In other words, the technical solution provided in the present disclosure is applicable to the MAP network, and a plurality of access points can be controlled on the MAP network, so that control information for the plurality of access points can be sent more efficiently.

## Description

### TECHNICAL FIELD

The present disclosure relates to the field of communications technologies, and in particular, to an access control method and apparatus, and a readable storage medium.

### BACKGROUND

A wireless local area network (Wireless Local Area Networks, WLAN) emerges to make up for a shortage of a wired local area network. During actual application, the WLAN is usually used for wireless network coverage in homes, buildings, and campuses. Current technical standards are mainly the 802.11 series standards. By using wireless technologies to transmit data, voice, and video signals in the air, the WLAN enables increasingly powerful portable data terminals and multimedia terminals to access a wireless network. Access control is indispensable during management of wireless network resources.

On a conventional wireless local area network, a single access point (AP, Access Point) is usually used to provide a data transmission service, and a wireless local area network coverage area of the single AP is usually several meters to dozens of meters. Therefore, access control is based on the single AP.

However, the coverage area of the single AP is limited. For a large-area WLAN application scenario, such as a villa or an exhibition hall, the coverage area of the single AP cannot meet data transmission requirements of various terminals.

### SUMMARY

The present disclosure provides an access control method and apparatus, and a readable storage medium, to resolve a problem in the related art. The technical solutions are as follows.

According to one aspect, the present disclosure provides an access control method. The method is based on a multi-AP (Multi-AP, MAP) network. A first functional entity on the MAP network obtains control information to be sent to a second functional entity on the MAP network, includes the control information in one or more first type-length-value (Type Length Value, TLV) messages, includes the one or more first TLV messages in a control message, and sends the control message to the second functional entity. The first functional entity controls the second functional entity through the control message, to control a plurality of access points on the MAP network, so that control messages for the plurality of access points are sent more efficiently.

In a possible implementation, the one or more first TLV messages include a first message, and the first message is used to indicate the second functional entity to report a network performance parameter. The first message carries an identifier of the network performance parameter, used to determine the network performance parameter to be reported.

In a possible implementation, the first message further carries at least one type of related information such as message type information, message length information, information about a target basic service set (Basic Service Set, BSS), information about a data transmission type, a reporting interval, a message validity period, information about a quantity of third functional entities, and identification information of the third functional entity. The third functional entity is a functional entity associated with the target BSS. The information carried in the first message is used to determine related information of the reported network performance parameter.

In addition, in a possible implementation, the first functional entity further receives information about the network performance parameter sent by the second functional entity, where the information about the network performance parameter is carried in one or more second TLV messages, and the second TLV messages are included in a response message and received by the first functional entity. The received information about the network performance parameter may be used to evaluate whether a current network configuration can meet a quality of service (Quality of Service, QoS) requirement of a user service, to further take an optimization measure.

In a possible implementation, in addition to the information about the network performance parameter, the second TLV messages may further carry at least one type of information such as message type information, message length information, the information about the target BSS, the information about the data transmission type, the information about the quantity of third functional entities, and the identification information of the third functional entity. The third functional entity is a functional entity associated with the target BSS. The information carried in the second TLV messages is used to determine related information of the information about the reported network performance parameter.

After the information about the network performance parameter is received by the first functional entity, the first functional entity may generate new control information based on the information about the network performance parameter. The new control information is carried in the first TLV messages and sent by the first functional entity to the second functional entity. The first TLV messages may be included in the new control message and sent by the first functional entity to the second functional entity, so that the second functional entity optimizes the network configuration accordingly, to improve network performance, meet the QoS requirement of the user service, and improve user experience.

In this way, in a possible implementation, the first TLV messages may further include a second message. The second message is used to indicate the second functional entity to configure a mapping relationship between a differentiated service code point (Differentiated Service Code Point, DSCP) and a user priority (User Priority, UP), and carries information about the mapping relationship between the DSCP and the UP. The second functional entity is indicated to configure the mapping relationship between the DSCP and the UP, to meet a QoS requirement of a user service.

Optionally, the second message may further carry at least one of message type information, message length information, information about a target BSS, information about a quantity of third functional entities, and identification information of the third functional entity. The third functional entity is a functional entity associated with the target BSS. The information carried in the second message may be used to determine the related information of the mapping relationship between the DSCP and the UP.

In addition, the first TLV messages may further include a third message, and the third message is used to indicate the second functional entity to configure an access parameter, and carries configuration information of the access parameter. The second functional entity is indicated to configure the access parameter, to meet a QoS requirement of a user service.

Optionally, the third message may further carry at least one of message type information, message length information, information about a target BSS, information about a quantity of third functional entities, and identification information of the third functional entity. The third functional entity is a functional entity associated with the target BSS. The information carried in the third message may be used to determine related information of the configuration information of the access parameter.

In an optional implementation, the network performance parameter includes at least a statistical average delay, a delay variation, and a packet loss rate; the information about the target BSS is a target basic service set identifier (Basic Service Set Identifier, BSSID); and the identification information of the third functional entity is a medium access control (Medium Access Control, MAC) address of the third functional entity.

Optionally, the information about the data transmission type is information about an access category (Access Category, AC) type, and the AC type includes AC_BK, AC_BE, AC_VI, and AC_VO. Alternatively, the information about the data transmission type is information about a UP type, and the UP type includes a UP 0, a UP 1, a UP 2, a UP 3, a UP 4, a UP 5, a UP 6, and a UP 7.

The second functional entity on the MAP network receives the control message that includes the one or more first TLV messages and that is sent by the first functional entity, and performs a related operation based on the control information carried in the first TLV messages.

The first TLV messages may include the first message, the second message, and the third message. For the first message, the second message, and the third message, refer to the foregoing descriptions. Details are not described herein again.

In addition, the second functional entity further sends the response message to the first functional entity, where the response message includes the one or more second TLV messages, and the second TLV messages carry the information about the network performance parameter reported by the second functional entity to the first functional entity. For the second TLV message, refer to the foregoing description. Details are not described herein again.

According to another aspect, the present disclosure provides an access control apparatus, where the apparatus is applied to a first functional entity on a MAP network. The apparatus includes a first obtaining module and a first sending module. The first obtaining module is configured to obtain control information. The first sending module is configured to send a control message to the second functional entity, where the control message includes one or more first TLV messages that carry the control information.

For a related description of the first TLV message, refer to the foregoing description. Details are not described herein again.

In addition, the apparatus further includes a first receiving module, where the first receiving module is configured to receive a response message sent by the second functional entity. For the response message, refer to the foregoing description. Details are not described herein again.

According to another aspect, the present disclosure provides an access control apparatus, where the apparatus is applied to a second functional entity on a MAP network. The apparatus includes a second receiving module and a second obtaining module. The second receiving module is configured to receive a control message sent by a first functional entity on the MAP network. The second obtaining module is configured to obtain one or more first TLV messages based on the control message, to perform a related operation based on control information carried in the first TLV messages.

For a related description of the first TLV message, refer to the foregoing description. Details are not described herein again.

In addition, the apparatus further includes a first sending module, where the first sending module is configured to send a response message to the first functional entity. For the response message, refer to the foregoing description. Details are not described herein again.

According to another aspect, an access control apparatus is provided. The apparatus includes a processor and a memory. The memory stores at least one instruction. The processor loads and executes the instruction to implement the access control method performed by the first functional entity or the second functional entity.

According to another aspect, a computer-readable storage medium is provided. The storage medium stores at least one instruction. A processor loads and executes the instruction to implement any access control method described above.

According to another aspect, a computer program product including an instruction is provided. When the computer program product runs on a computer, the computer is enabled to perform any access control method described above.

The technical solutions provided in the present disclosure include at least the following beneficial effects:

In the present disclosure, the first functional entity on the MAP network sends the control message to the second functional entity on the MAP network. Because the control message includes the one or more first TLV messages used to carry the control information, the second functional entity can perform the related operation based on the control information. In this way, the first functional entity controls the second functional entity, to control a plurality of access points on the MAP network, so that control information for the plurality of access points is sent more efficiently.

In addition, the control message is used to indicate the second functional entity to configure the mapping relationship between the DSCP and the UP, and/or configure the access parameter, to optimize the network configuration, improve network performance, meet the QoS requirement of the user service, and improve user experience.

It should be understood that the foregoing general descriptions and the following detailed descriptions are merely illustrative and explanative, and are not intended to limit the present disclosure.

### BRIEF DESCRIPTION OF DRAWINGS

FIG. 1 is a schematic diagram of an application scenario according to an embodiment of the present disclosure;
FIG. 2 is a diagram of an architecture of a MAP communications system according to an embodiment of the present disclosure;
FIG. 3 is a flowchart of an access control method according to an embodiment of the present disclosure;
FIG. 4 is a flowchart of an access control method according to an embodiment of the present disclosure;
FIG. 5 is a flowchart of an access control method according to an embodiment of the present disclosure;
FIG. 6 is a flowchart of an access control method according to an embodiment of the present disclosure;
FIG. 7 is a flowchart of an access control method according to an embodiment of the present disclosure;
FIG. 8 is a flowchart of an access control method according to an embodiment of the present disclosure;
FIG. 9 is a flowchart of an access control method according to an embodiment of the present disclosure;
FIG. 10 is a structural block diagram of an access control apparatus according to an embodiment of the present disclosure;
FIG. 11 is a structural block diagram of an access control apparatus according to an embodiment of the present disclosure;
FIG. 12 is a structural block diagram of an access control apparatus according to an embodiment of the present disclosure;
FIG. 13 is a structural block diagram of an access control apparatus according to an embodiment of the present disclosure;
FIG. 14 is a structural block diagram of an access control apparatus according to an embodiment of the present disclosure;
FIG. 15 is a structural block diagram of an access control apparatus according to an embodiment of the present disclosure;
FIG. 16 is a structural block diagram of an access control apparatus according to an embodiment of the present disclosure;
FIG. 17 is a structural block diagram of an access control apparatus according to an embodiment of the present disclosure;
FIG. 18 is a structural block diagram of an access control apparatus according to an embodiment of the present disclosure;
FIG. 19 is a structural block diagram of an access control apparatus according to an embodiment of the present disclosure; and
FIG. 20 is a structural block diagram of an access control apparatus according to an embodiment of the present disclosure.

### DESCRIPTION OF EMBODIMENTS

To make the objectives, technical solutions, and advantages of the present disclosure clearer, the following further describes the embodiments of the present disclosure in detail with reference to the accompanying drawings.

An application scenario of the embodiments of the present disclosure is first described before the embodiments of the present disclosure are described in detail.

The following describes a possible applicable scenario of the present disclosure by using a local area network, and in particular, a wireless local area network according to a wireless local area network standard provided in the IEEE 802.11 standard as an example. It should be noted that the present disclosure is not limited to the following example applicable scenario, and is also applicable to another scenario in which an access control solution needs to be used.

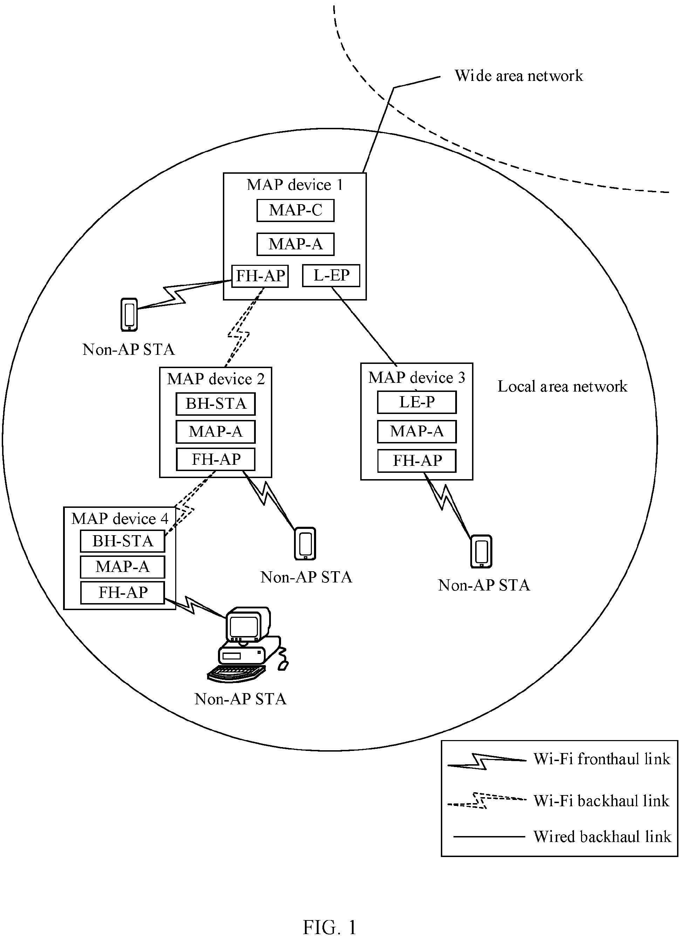

On a conventional wireless local area network, a single AP is usually used to provide a data transmission service. However, a coverage area of the single AP is limited. In a large-area scenario such as a villa, MAP may be used to implement a large wireless local area network coverage area. FIG. 1 is a schematic diagram of a MAP scenario according to an embodiment of the present disclosure.

As shown in FIG. 1, a wireless local area network is connected to a wide area network through a MAP device 1, and provides a data transmission service for a non-access-point station (Non Access Point Station, Non-AP STA) through the MAP device 1, a MAP device 2 and a MAP device 3 that are connected to the MAP device 1, and a MAP device 4 connected to the MAP device 2. The non-AP STA is a terminal that accepts the data transmission service provided by the wireless local area network. A backhaul station (Backhaul Station, BH-STA) in the MAP device 2 is connected to a fronthaul access point (Fronthaul AP, FH-AP) in the MAP device 1 through a Wi-Fi backhaul link. An FH-AP in the MAP device 2 is connected to the non-AP STA through a Wi-Fi fronthaul link. A logical Ethernet port (Logical Ethernet Port, LE-P) in the MAP device 3 is connected to an LE-P in the MAP device 1 through a wired backhaul link. Connections between other devices in FIG. 1 are similar, and details are not described.

As shown in FIG. 1, the wireless local area network provides a service for one or more FH-APs, BH-STAs, or stations (Station, STA) through a plurality of MAP devices. Different FH-APs, BH-STAs, or STAs may have different data transmission requirements, that is, have different QoS requirements, and the wireless local area network needs to provide different QoS policies based on different QoS requirements to ensure quality of service of data transmission. A video conference, voice call, and file download are used as an example. The video conference and voice call have a relatively high requirement on a QoS delay, and the file download has a relatively low requirement on the QoS delay. A communications network may evaluate a QoS level during actual transmission based on an obtained network performance parameter, and adjust a QoS policy to meet QoS requirements of different data transmission types.

According to different QoS requirements, data transmission is classified based on an access type of a service. There may be a plurality of classification manners. For example, a data transmission type may be a first type or a second type. For example, the first type is an AC type, and the AC type includes but is not limited to one or more of the following types:
AC_BK: background;
AC_BE: best effort;
AC_VI: video; or
AC_VO: voice.

For another example, the second type is an UP type. Optionally, there may be eight UP types whose sequence numbers are 0 to 7, and the eight UP types are a UP 0, a UP 1, a UP 2, a UP 3, a UP 4, a UP 5, a UP 6, and aUP7.

Different UP types of data transmission may be mapped to different AC types. During data transmission, a UP type of the data transmission is mapped to an AC type at a MAC layer, so that the data is added to a corresponding transmission queue based on the AC type, and is transmitted based on a corresponding access parameter.

For example, for a mapping relationship between a UP type and an AC type, refer to Table 1. As shown in Table 1, the UP 1 is mapped to AC_BK, and AC_BK has a lowest priority. The UP 6 is mapped to AC VO, and AC VO has a highest priority. Other mapping relationships in the table are similar, and details are not described.

**Table 1**

| Priority | UP | AC |
|---|---|---|
| Lowest priority | 1 | AC_BK |
| | 2 | AC_BK |
| | 0 | AC_BE |
| | 3 | AC_BE |
| | 4 | AC_VI |
| | 5 | AC_VI |
| Highest priority | 6 | AC_VO |
| | 7 | AC_VO |

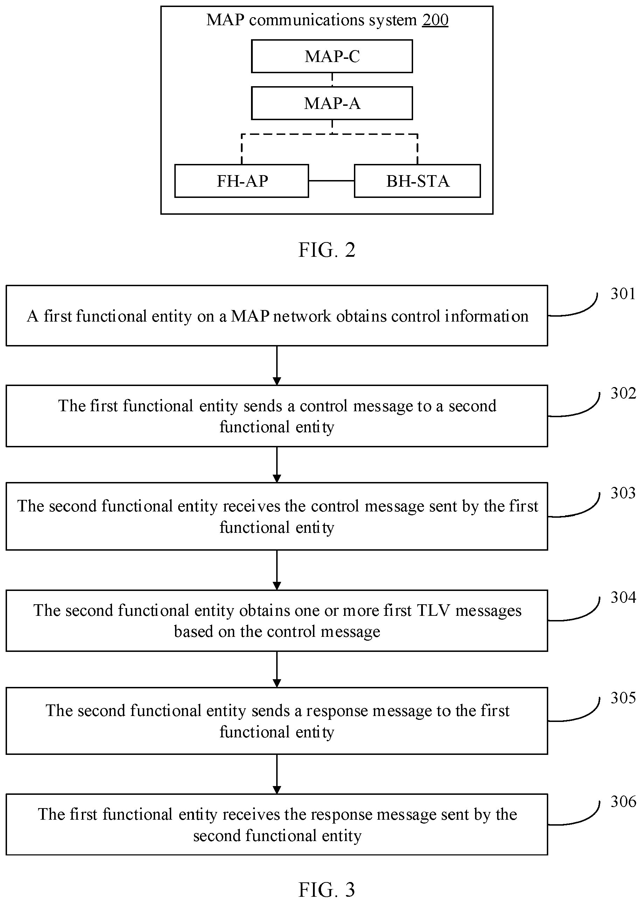

The following describes a system architecture of a wireless local area network provided in an embodiment of the present disclosure. FIG. 2 is a diagram of an architecture of an optional MAP communications system. The MAP communications system 200 includes at least one multi-AP controller (MAP-C, Multi-AP Controller), at least one multi-AP agent (MAP-A, Multi-AP Agent), at least one FH-AP, and at least one BH-STA.

Dashed lines represent control interfaces, and a solid line represents a data interface.

The MAP-C is a logical control entity of the MAP network, and may control the MAP-A to collect a network performance parameter, and optimize a configuration of the MAP network based on the network performance parameter reported by the MAP-A, to improve QoS of data transmission. The MAP-C controls the MAP-A by sending a control message to the MAP-A, where the control message carries control information used to indicate the MAP-A to perform a related operation.

The MAP-A obtains the control information by receiving the control message from the MAP-C, and controls the FH-AP and the BH-STA based on the control information, to implement functions such as network configuration and network performance parameter collection, to improve QoS of data transmission.

The FH-AP implements functions such as network performance parameter collection according to an instruction of the MAP-A.

The MAP-C may communicate with the MAP-A in a wired or wireless communication manner. The control message from the MAP-C is transmitted in a form of a control message data unit (Control Message Data Unit, CMDU) in unicast mode, and is obtained by the MAP-A. One CMDU may include a plurality of messages. Table 2 shows messages that may be included in the CMDU and descriptions of the messages.

**Table 2**

| Message name | Message length | Description |
|---|---|---|
| Message Version | 1 byte | Version number of the 802.11 standard to which the control message belongs |
| ReservedField | 1 byte | Reserved field, which includes no message content |
| messageType | 2 bytes | Information type |
| messageId | 2 bytes | Information identifier |
| fragmentId | 1 byte | Fragment identifier |
| lastFragmentIndicator | 1 bit (b7) | Last fragment indicator |
| relay Indicator | 1 bit (b6) | Relay indicator |
| ReservedField | 6 bits (b5-b0) | Reserved field, which includes no message content |
| TLVs | Variable length | One or more TLV messages |
| endOfMessageTlv | 3 bytes | Indicates the end of the TLV message |

It should be noted that b7, b6, and b5-b0 in Table 2 each represent a sequence number of a bit included in one byte. The byte includes eight bits whose sequence numbers are b0, b1, b2, b3, b4, b5, b6, and b7. b0-b7 included in another part of the present disclosure also indicate sequence numbers of bits included in one byte. Details are not described again.

One CMDU may include one or more TLV messages. TLV is a message format. Different TLV messages may have different control functions, may carry different control information content, or may have different information lengths. One CMDU may include a plurality of TLV messages having different control functions, or may include a plurality of TLV messages having a same function but carrying different control information content, for example, a plurality of TLV messages that have a same function but whose receiving points are different MAP-As.

Optionally, the TLV message includes at least the following fields:

Message type (tlvType) field: The message is one of a plurality of types of messages in a TLV format, and the message type field is used to carry information about the type.

Message length (tlvLength) field: This field carries information about a length of the message. Optionally, the length may be a positive integer quantity of bytes.

Message value (tlvValue) field: This field carries information about the information content.

In one aspect, one TLV message may include a first message, where the first message is used by the MAP-C to indicate the MAP-A to report a network performance parameter, the first message carries identification information of the network performance parameter, and the first message is sent by the MAP-C and received by the MAP-A.

Optionally, the network performance parameter includes at least the following parameters:

Average delay: is an average delay of data transmission.

Delay variation: is a variation of a data transmission delay.

Packet loss rate: is a quantity or rate of lost data packets during data transmission.

Optionally, the network performance parameter may further include one or more of the following parameters:

Packet error rate: is a quantity or rate of data packets that are incorrectly transmitted during data transmission.

Delay variance: is a variance of the data transmission delay.

Optionally, in addition to the identification information of the network performance parameter, the first message further carries one or more of the following information:

Message type information: The message is one of a plurality of types of messages in a TLV format, and type information of the message is used to indicate an identifier of the type.

Message length information: is information about a length of the message. Optionally, the length may be a positive integer quantity of bytes.

Information about a target BSS: is used to indicate information about a target BSS controlled by the TLV message. Optionally, the information about the target BSS is a BSSID.

Information about a data transmission type: is used to indicate a data transmission type of the network performance parameter to be reported.

Identification information of the network performance parameter: is used to indicate identification information of the network performance parameter to be reported.

Reporting interval: is used to indicate an interval of reporting the network performance parameter through the message.

Message validity period: is used to indicate a control validity period of the message.

STA quantity information: is used to indicate a quantity of STAs associated with the target BSS.

STA identification information: is used to indicate an identifier of the STA associated with the target BSS.

Optionally, a tlvType field of the first message carries the message type information; a tlvLength field of the first message carries the message length information; and a tlvValue field of the first message carries one or more of the following information: the information about the target BSS, the information about the data transmission type, the identification information of the network performance parameter, the reporting interval, the message validity period, the STA quantity information, and the STA identification information.

In a possible implementation, the first message is a delay statistic request message. The message is in a TLV format and is used by the MAP-C to indicate the MAP-A to report the network performance parameter.

For example, a TLV format of the delay statistic request message is shown in Table 3. It should be noted that the TLV format of the delay statistic request message is not limited to a form shown in Table 3, and may include one or more of fields included in Table 3.

**Table 3**

| Field (field) | Length (length) | Value (value) | Description (description) |
|---|---|---|---|
| tlvType | 1 byte | XX | TLV message type corresponding to the delay statistic request message |
| tlvLength | 2 bytes | Variable | Length (quantity of bytes) of an ensuing part of the message |
| tlvValue | 6 bytes | Variable | Information about the target BSS |
| | 1 byte | Variable | Information about the data transmission type |
| | X bytes | Variable | Identification information of the network performance parameter |
| | 1 byte | Variable | Reporting interval |
| | 1 byte | Variable | Message validity period |
| | 1 byte | k | Quantity of STAs |
| | 0 or 6 x k bytes | One of k EUI-48 values | STA identification information |

The value of the tlvType field is XX. This means that the value of the tlvType field is determined based on a value of the TLV message type corresponding to the delay statistic request message.

The value of the tlvLength field is variable. This means that the value of the tlvLength field is determined based on lengths of the tlvType field and the tlvValue field following the tlvLength field in the delay statistic request message. A length of a tlvValue field in different TLV messages is variable due to change in content of the tlvValue field. Therefore, the value of the tlvLength field is also variable.

The information about the target BSS carried in the tlvValue field is included in 6 bytes. For a meaning of the information about the target BSS, refer to the foregoing description. Details are not described herein again. Optionally, the value is any EUI-48 value.

The information about the data transmission type carried in the tlvValue field is included in 1 byte. For a meaning of the information about the data transmission type, refer to the foregoing description. Optionally, the data transmission type is a first type, and the first type may be an AC type or a UP type. Optionally, a type identifier of the AC type or the UP type is indicated in a bit-map (Bit-Map) form by using eight bits in the byte.

Table 4 shows an optional method for indicating the information about the data transmission type. When the first type is the AC type, a value of b0 indicates whether a network performance parameter of an AC_VO type of data transmission needs to be reported. When b0 is equal to 1, the network performance parameter of the AC_VO type needs to be reported. When b0 is equal to 0, reporting is not required. Meanings of values of other bit sequence numbers are similar, and details are not described. Reserved means that the bit sequence number is not used to indicate information in the table, but is not limited to another purpose. When the first type is the UP type, a value of b0 indicates whether a network performance parameter of a UP 0 type of data transmission needs to be reported. When b0 is equal to 1, the network performance parameter of the UP 0 type needs to be reported. When b0 is equal to 0, reporting is not required. Meanings of values of other bit sequence numbers are similar, and details are not described. It should be noted that Table 4 shows an example of the method for indicating the information about the data transmission type, and the present disclosure is not limited to another method for indicating the information about the data transmission type.

**Table 4**

| Sequence number of a bit in one byte | AC Type | UP Type |
|---|---|---|
| b0 | AC_VO | UP 0 |
| b1 | AC_VI | UP 1 |
| b2 | AC_BE | UP 2 |
| b3 | AC_BK | UP 3 |
| b4 | Reserved | UP 4 |
| b5 | Reserved | UP 5 |
| b6 | Reserved | UP 6 |
| b7 | Reserved | UP 7 |

The identification information of the network performance parameter carried in the tlvValue field is included in X bytes, where X is a positive integer, and a value of X is determined based on a quantity of network performance parameters. Optionally, the network performance parameter to be reported is indicated in a bit-map (Bit-Map) form by using a bit in the X bytes.

Table 5 shows an optional method for indicating the network performance parameter to be reported. In this example, the value of X is 1. A value of b0 indicates whether an average delay needs to be reported. When b0 is equal to 1, the average delay needs to be reported. When b0 is equal to 0, reporting is not required. Meanings of values of other bit sequence numbers are similar, and details are not described. Reserved means that the bit sequence number is not used to indicate information in the table, but is not limited to another purpose. It should be noted that Table 5 shows an example of the method for indicating the network performance parameter, and the present disclosure is not limited to another method for indicating the network performance parameter.

**Table 5**

| Sequence number of a bit in the X bytes | Name of a network performance parameter |
|---|---|
| b0 | Average delay |
| b1 | Delay variation |
| b2 | Packet loss rate |
| b3 | Packet error rate |
| b4 | Delay variance |
| b5 | Reserved |
| b6 | Reserved |
| b7 | Reserved |

A value of a field including information about the reporting interval in the tlvValue field is variable. This means that the value of the field may be determined according to a method for indicating an optional value of the reporting interval. For example, the reporting interval is one of all optional values of the reporting interval. When the value of the field is 00000001, the reporting interval is a first optional value. When the value of the field is 00000010, the reporting interval is a second optional value. The rest may be deduced by analogy, and details are not described. For another example, the reporting interval indicated in a bit-map form is one or more of all optional values of the reporting interval. When the value of the field is 00000001, the reporting interval is a first optional value. When the value of the field is 00000011, the reporting interval is the first optional value and a second optional value. When the value of the field is 00000101, the reporting interval is the first optional value and a third optional value. The rest may be deduced by analogy, and details are not described.

A value of a field including information about the message validity period in the tlvValue field is variable. This means that the value of the field may be determined according to a method for indicating an optional value of the information about the message validity period. For the indication method, refer to the foregoing method for indicating the information about the reporting interval. Details are not described herein.

A value of a field including the quantity of STAs in the tlvValue field is k. This means that a quantity of STAs that are served by the MAP-A receiving the message and that need to report the network performance parameter is k, where k is a positive integer.

The tlvValue field includes a STA identification information field. An optional method for indicating the STA identification information field is as follows:

When k = 0, network performance parameters of corresponding ACs or UPs of all STAs in the target BSS are reported, where the corresponding ACs or UPs is AC or UP types indicated in the information about the data transmission type. In this case, a length of the STA identification information field is 0.

When k > 0, a network performance parameter of a corresponding AC (or UP) of a specified STA in the target BSS is reported, where the specified STA is a STA whose identifier is indicated in the STA identification information field. In this case, a length of the STA identification information field is 6 x k. A value of the STA identification information field is determined by MAC address values of k STAs.

Table 6 shows an optional method for indicating the STA identification information. In this example, a value of the first 6 bytes of the STA identification information field is a value of a MAC address of a first STA, and by analogy, a value of 6 x k bytes of the STA identification information field is obtained.

**Table 6**

| STA identification information field | Value of the STA identification information field |
|---|---|
| First 6 bytes | MAC address of the first STA |
| Second 6 bytes | MAC address of a second STA |
| ... | ... |
| k^{th} 6 bytes | MAC address of a k^{th} STA |

It should be noted that the foregoing is an example of the method for indicating the STA identification information, and the present disclosure is not limited to another method for indicating the STA identification information.

In another aspect, one TLV message may include a second message, where the second message is used to indicate a mapping relationship between a first type of data transmission and a second type of data transmission, and is sent by the MAP-C and received by the MAP-A.

As described above, the first type of data transmission and the second type of data transmission are two different classification manners of data transmission.

Optionally, the second message carries one or more of the following information:

Message type information is described above, and details are not described again.

Message length information is described above, and details are not described again.

Information about the mapping relationship between the first type and the second type.

Information about a target BSS is described above, and details are not described again.

STA quantity information is described above, and details are not described again.

STA identification information is described above, and details are not described again.

Optionally, a tlvType field of the second message carries the message type information; a tlvLength field of the second message carries the message length information; and a tlvValue field of the second message carries one or more of the following information: the information about the mapping relationship between the first type and the second type, the information about the target BSS, the STA quantity information, and the STA identification information.

Optionally, the first type may be an AC or a UP. For the AC and the UP, refer to the foregoing descriptions. Details are not described herein again.

Optionally, the second type may be in a form of a differentiated service code point (DSCP, Differentiated service code point). The DSCP is layer 3 of data transmission in wireless communication, that is, a priority classification manner of a network layer. Optionally, the DSCP includes a DSCP whose label is any value in 0-63.

The DSCP is mapped to a corresponding classification manner of data transmission, namely, the UP, at the MAC layer, and the UP is applied to type indication of data transmission at the MAC layer.

The MAP-C may notify the MAP-A through the second message, and the MAP-A controls one or more BH-STAs, FH-APs, or STAs associated with the MAP-A to be mapped to a corresponding UP based on the DSCP, namely, the mapping relationship between the DSCP and the UP.

The mapping relationship between the DSCP and the UP may include at least one of the following two mapping relationships: a first mapping relationship and a DSCP exceptional mapping relationship.

The first mapping relationship is a value range of a DSCP to which each user priority is mapped.

Table 7 shows a possible first mapping relationship between a DSCP and a UP. A UP is mapped to all values between a start value of the DSCP and an end value of the DSCP. For example, as shown in Table 7, a range of a DSCP to which a UP 0 is mapped is 0. A range of a DSCP to which a UP 1 is mapped is 1-9. The rest may be deduced by analogy. The end value of the DSCP is greater than or equal to the start value of the DSCP.

**Table 7**

| UP range | Start value of the DSCP | End value of the DSCP |
|---|---|---|
| UP 0 range | 0 | 0 |
| UP 1 range | 1 | 9 |
| UP 2 range | 10 | 16 |
| UP 3 range | 17 | 23 |
| UP 4 range | 24 | 31 |
| UP 5 range | 32 | 40 |
| UP 6 range | 41 | 47 |
| UP 7 range | 48 | 63 |

The exceptional mapping relationship is one or more exceptional mapping relationships different from the first mapping relationship. To be specific, a specific UP value is mapped to a specific DSCP value. For example, a UP 2 is mapped to 25, and a UP 3 is mapped to 8.

In a possible implementation, the second message is a QoS map message. The message is in a TLV format and is used to indicate the mapping relationship between the DSCP and the UP.

The MAP-A indicates an FH-AP, a BH-STA, and a non-AP STA to map the DSCP to the corresponding UP during data transmission on a backhaul link and a fronthaul link based on the received QoS map message.

For example, a TLV format of the QoS map message is shown in Table 8. It should be noted that the TLV format of the QoS map message is not limited to a form shown in Table 8, and may include one or more of fields included in Table 8.

**Table 8**

| Field (field) | Length (length) | Value (value) | Description |
|---|---|---|---|
| tlvType | 1 byte | xx | TLV message type corresponding to the QoS map message |
| tlvLength | 2 bytes | Variable | Length (quantity of bytes) of an ensuing part |
| tlvValue | 6 bytes | Variable | Information about the target BSS |
| | 1 byte | Variable | Length indication field of the |
| | | | information about the mapping relationship between the DSCP and the UP |
| | 1 byte | Variable | Sequence number of the DSCP whose value range is 0-63 and 255 |
| | 1 byte | Variable | Sequence number of the UP whose value range is 0-7 |
| | | | The foregoing two fields constitute indication information of one exceptional mapping relationship, and are repeated n - 1 times to indicate remaining n - 1 exceptional mapping relationships |
| | 1 byte | Variable | Start value of a DSCP corresponding to a first UP sequence number |
| | 1 byte | Variable | End value of the DSCP corresponding to the first UP sequence number |
| | | | The foregoing two fields constitute indication information of a mapping relationship of the first UP sequence number in the first mapping relationship, and are repeated seven times to indicate mapping relationships of remaining seven UP sequence numbers |
| | 1 byte | k | Quantity of STAs |
| | 0 or 6 x k bytes | One of k EUI-48 values | STA identification information |

For the message type information, the message length information, the information about the target BSS, the STA quantity information, and the STA identification information, refer to the foregoing descriptions. Details are not described herein again.

The following describes a method for indicating the mapping relationship between the DSCP and the UP. It should be noted that the method for indicating the mapping relationship between the DSCP and the UP is not limited to the following examples.

A length of the length indication field of the information about the mapping relationship between the DSCP and the UP is 1 byte. This field is used to indicate a length of the information about the mapping relationship between the DSCP and the UP. The information about the mapping relationship between the DSCP and the UP includes the first mapping relationship and n exceptional mapping relationships.

Optionally, a method for indicating the length of the information about the mapping relationship between the DSCP and the UP is as follows: A value of the indication field is 16 + 2 x n, where n is a quantity of exceptional mapping relationships. This means that the length of the information about the mapping relationship between the DSCP and the UP is 16 + 2 x n bytes.

Optionally, a method for indicating the length of the information about the mapping relationship between the DSCP and the UP is as follows: A value of the indication field is a value of n, where n is a quantity of exceptional mapping relationships.

A value of 2 x n bytes after the length indication field of the information about the mapping relationship between the DSCP and the UP are shown in Table 9. A first byte indicates a DSCP sequence number in a first exceptional mapping relationship, a second byte indicates a UP sequence number in the first exceptional mapping relationship, and the first byte and the second byte indicate the first exceptional mapping relationship. By analogy, the 2 x n bytes indicate n exceptional mapping relationships.

**Table 9**

| Byte sequence number | Value |
|---|---|
| 1 | DSCP sequence number in the first exceptional mapping relationship |
| 2 | UP sequence number in the first exceptional mapping relationship |
| 3 | DSCP sequence number in a second exceptional mapping relationship |
| 4 | UP sequence number in the second exceptional mapping relationship |
| ... | ... |
| 2 x n - 1 | DSCP sequence number in a k^{th} exceptional mapping relationship |
| 2 x n | UP sequence number in the k^{th} exceptional mapping relationship |

16 bytes after a 2 x n byte field of an indication field of information about the exceptional mapping relationships between DSCPs and UPs are used to indicate the first mapping relationship between the DSCP and the UP. For a value of the 16 bytes, refer to the example in Table 7. It should be noted that the UP range, the start value of the DSCP, and the end value of the DSCP are not limited to the values in Table 7, and may be further other values. This is not limited in the present disclosure.

It should be noted that when a start value and an end value of a DSCP corresponding to one UP sequence number in the first mapping relationship are both 255, a priority corresponding to the UP sequence number is disabled.

In another aspect, one TLV message may include a third message, where the third message is used to set different access parameters for different ACs, and is sent by the MAP-C and received by the MAP-A. Different access parameters are configured for different ACs to reflect a priority difference.

Optionally, the access parameter includes but is not limited to one or more of the following parameters: an arbitration inter-frame space (Arbitration inter-frame space, AIFS), a minimum contention window (Contention Window minimum, CWmin), a maximum contention window (Contention Window maximum, CWmax), and a transmit opportunity limit (Transmit Opportunity limit, TXOP limit).

Optionally, the third message carries one or more of the following information:

Message type information is described above, and details are not described again.

Message length information is described above, and details are not described again.

Information about a target BSS is described above, and details are not described again.

Information about the access parameter is used to indicate a value of the access parameter.

STA quantity information is described above, and details are not described again.

STA identification information is described above, and details are not described again.

Optionally, a tlvType field of the third message carries the message type information; a tlvLength field of the third message carries the message length information; and a tlvValue field of the third message carries one or more of the following information: the information about the access parameter, the information about the target BSS, the STA quantity information, and the STA identification information.

For example, Table 10 shows a group of optional specified values of access parameters. It should be noted that the specified values of the access parameters are not limited to those listed in Table 10, and may be set to other values as required.

**Table 10**

| AC | CWmin | CWmax | AIFS | TXOP limit |
|---|---|---|---|---|
| AC_BK | 31 | 1023 | 7 | 0 |
| AC_BE | 31 | 1023 | 3 | 0 |
| AC_VI | 15 | 31 | 2 | 3.008 ms |
| AC_VO | 7 | 15 | 2 | 1.504 ms |

In a possible implementation, the third message used to indicate the specified values of the access parameters is an enhanced distributed channel access parameter (EDCA parameter, Enhance distributed channel access parameter) message, and the EDCA parameter message is in a TLV format.

For example, the TLV format of the EDCA parameter message is shown in Table 11. It should be noted that the TLV format of the EDCA parameter message is not limited to a form shown in Table 11, and may include one or more of fields included in Table 11.

**Table 11**

| Field (field) | Length (length) | Value (value) | Description |
|---|---|---|---|
| tlvType | 1 byte | xx | TLV message type corresponding to the EDCA parameter message |
| tlvLength | 2 bytes | Variable | Length (quantity of bytes) of an ensuing part |
| tlvValue | 6 bytes | Variable | Information about a target BSS |
| | 1 byte | Variable | AFIS of an AC x |
| | 1 byte | Variable | CWmin and CWmax of the AC x |
| | 2 bytes | Variable | TXOP limit of the AC x |
| | | | The foregoing three fields are repeated three times to indicate access parameters of the other three ACs |
| | 1 byte | k | Quantity of STAs |
| | 0 or 6 x k bytes | One of k EUI-48 values | STA identification information |

For the message type information, the message length information, the information about the target BSS, the STA quantity information, and the STA identification information, refer to the foregoing descriptions. Details are not described herein again.

The following describes a method for indicating the access parameter. It should be noted that the method for indicating the access parameter is not limited to the following example.

The byte for the AFIS of the AC x in the tlvValue field is used to indicate a value of the AFIS for AC x-type data transmission. The byte for the CWmin and CWmax in the tlvValue field is used to indicate values of the CWmin and CWmax for the AC x-type data transmission. The bytes for the TXOP limit in the tlvValue field are used to indicate a value of the TXOP limit for the AC x-type data transmission. The AC x is one of AC BK, AC BE, AC_VI, and AC_VO, and the next six bytes are used to indicate values of the access parameters of the other three AC types. The values of the access parameters may be shown in Table 10. It should be noted that the specified values of the access parameters are not limited to those listed in Table 10, and may be set to other values as required.

In another aspect, one TLV message may include a fourth message, where the fourth message is used by the MAP-A to report a network performance parameter to the MAP-C, and is sent by the MAP-A and received by the MAP-C.

For the network performance parameter, refer to the foregoing description. Details are not described herein again.

Optionally, the fourth message carries one or more of the following information:

Message type information is described above, and details are not described again.

Message length information is described above, and details are not described again.

Information about a target BSS is described above, and details are not described again.

Information about a data transmission type is used to indicate a data transmission type of the network performance parameter to be reported.

Information about the network performance parameter is used to indicate information about the network performance parameter to be reported.

Related STA quantity information is described above, and details are not described again.

Related STA identification information is described above, and details are not described again.

Optionally, a tlvType field of the fourth message carries the message type information; a tlvLength field of the fourth message carries the message length information; and a tlvValue field of the fourth message carries one or more of the following information: the information about the target BSS, the information about the data transmission type, the information about the network performance parameter, the STA quantity information, and the STA identification information.

In a possible implementation, the fourth message is a delay statistic response message. The message is in a TLV format and is used by the MAP-A to report the network performance parameter to the MAP-C.

For example, a TLV format of the delay statistic response message is shown in Table 12. It should be noted that the TLV format of the delay statistic response message is not limited to a form shown in Table 12, and may include one or more of fields included in Table 12.

**Table 12**

| Field (field) | Length (length) | Value (value) | Description |
|---|---|---|---|
| tlvType | 1 byte | xx | TLV message type corresponding to the delay statistic response message |
| tlvLength | 2 bytes | Variable | Length (quantity of bytes) of an ensuing part |
| tlvValue | 6 bytes | Variable | Information about the target BSS |
| | 1 byte | Variable | Information about the data transmission type |
| | 1 byte | k | Quantity of STAs |
| | 0 or 6 x k bytes | One of k EUI-48 values | STA identification information |
| | X bytes (optional) | Variable | Information about the network |
| | | | performance parameter |

For the message type information, the message length information, the information about the target BSS, the STA quantity information, and the STA identification information, refer to the foregoing descriptions. Details are not described herein again.

The information about the network performance parameter is used to indicate the information about the network performance parameter reported by the MAP-A to the MAP-C. The following describes a method for indicating the information about the network performance parameter. It should be noted that the method for indicating the information about the network performance parameter is not limited to the following examples.

Example 1: The information about the network performance parameter is used to indicate a value of the network performance parameter reported by the MAP-A to the MAP-C.

For example, if a value of an average delay of one of network performance parameters is 15 milliseconds, a value of a field corresponding to the average delay in an information field of the network performance parameter is 15.

Example 2: The information about the network performance parameter is used to indicate information corresponding to a value of the network performance parameter reported by the MAP-A to the MAP-C.

For example, the information corresponding to the value is a sequence number. A value of an average delay of one of reported network performance parameters is 20 milliseconds. According to a table of sequence numbers for values of the average delay, such as Table 13, a sequence number corresponding to the value of the average delay is 2. In this case, a value of a field corresponding to the average delay in an information field of the network performance parameter is 2.

**Table 13**

| Sequence number | Value of the average delay (millisecond) |
|---|---|
| 1 | 10 |
| 2 | 20 |
| 3 | 30 |
| 4 | 40 |

Example 3: The information about the network performance parameter is used to indicate sequence number information of the network performance parameter reported by the MAP-A to the MAP-C, and a specific value corresponding to the sequence number information is transmitted through another message.

For example, refer to the sequence numbers in Table 5. A specific value of the network performance parameter in the table may be transmitted by using an information field in a message other than the second TLV message.

As described above, the TLV message includes at least one of the following messages:
the first message, the second message, the third message, and the fourth message.

For example, the TLV message includes at least one of the following messages:
the delay statistic request message, the QoS map message, the EDCA parameter message, and the delay statistic response message.

It should be noted that the TLV message is not limited to the foregoing messages.

Optionally, a 1-byte message type field in the TLV message is used to indicate the message type information. A value of the message type field corresponds to a message type. For example, Table 14 shows a possible correspondence between a value of a message type field and a message type. When a value of a message type field of a TLV message is 00000000, the TLV message is the first message, and so on. A correspondence shown in Table 15 is similar to that in Table 14, and details are not described.

**Table 14**

| Message type | Value of a message type field |
|---|---|
| First message | 00000000 |
| Second message | 00000001 |
| Third message | 00000010 |
| Fourth message | 00000011 |

**Table 15**

| Message type | Value of a message type field |
|---|---|
| Delay statistic request message | 00000000 |
| QoS map message | 00000001 |
| EDCA message | 00000010 |
| Delay statistic response message | 00000011 |

The following describes the method embodiments in the present disclosure.

FIG. 3 is a flowchart of an access control method according to an embodiment of the present disclosure. The method is applied to a MAP network, and includes the following steps.

Step 301: A first functional entity on the MAP network obtains control information.

The control information is used to indicate a second functional entity on the MAP network to perform a related operation based on the control information.

Step 302: The first functional entity sends a control message to the second functional entity, where the control message includes one or more first TLV messages that carry the control information.

It should be noted that the second functional entity may be directly or indirectly connected to the first functional entity over a wired or wireless network. The indirect connection means that there is another functional entity on a connection path between the first functional entity and the second functional entity.

Optionally, the first functional entity is a MAP-C, and the second functional entity is a MAP-A.

Optionally, to distinguish between a TLV message included in a control message sent by the MAP-C to the MAP-A and a TLV message included in a response message sent by the MAP-A to the MAP-C, in the present disclosure, the TLV message included in the control message is referred to as a first TLV message, and the TLV message included in the response message is referred to as a second TLV message. In this step, the control message may include the one or more first TLV messages, and the one or more first TLV messages carry the control information.

The first TLV messages include but are not limited to one or more of the following messages:
a first message, a second message, and a third message.

For example, the first TLV messages include but are not limited to one or more of the following messages:
a delay statistic request message, a QoS map message, and an EDCA parameter message.

For the foregoing messages, refer to the foregoing descriptions. Details are not described herein again.

Step 303: The second functional entity receives the control message sent by the first functional entity.

Step 304: The second functional entity obtains the one or more first TLV messages based on the control message.

Step 305: The second functional entity sends a response message to the first functional entity.

The response message includes one or more second TLV messages, and the second TLV messages carry information about a network performance parameter.

Optionally, the second TLV messages include but are not limited to a fourth message.

For example, the second TLV messages include but are not limited to a delay statistic response message.

For the foregoing message, refer to the foregoing description. Details are not described herein again.

Step 306: The first functional entity receives the response message sent by the second functional entity.

It should be noted that, for the MAP-C to send the control message to the MAP-A, steps 303 to 306 are optional steps.

In the present disclosure, the first functional entity on the MAP network sends the control message to the second functional entity on the MAP network. Because the control message includes the one or more first TLV messages used to carry the control information, the second functional entity can perform the related operation based on the control information. In this way, the first functional entity controls the second functional entity, to control a plurality of access points on the MAP network, so that control information for the plurality of access points is sent more efficiently.

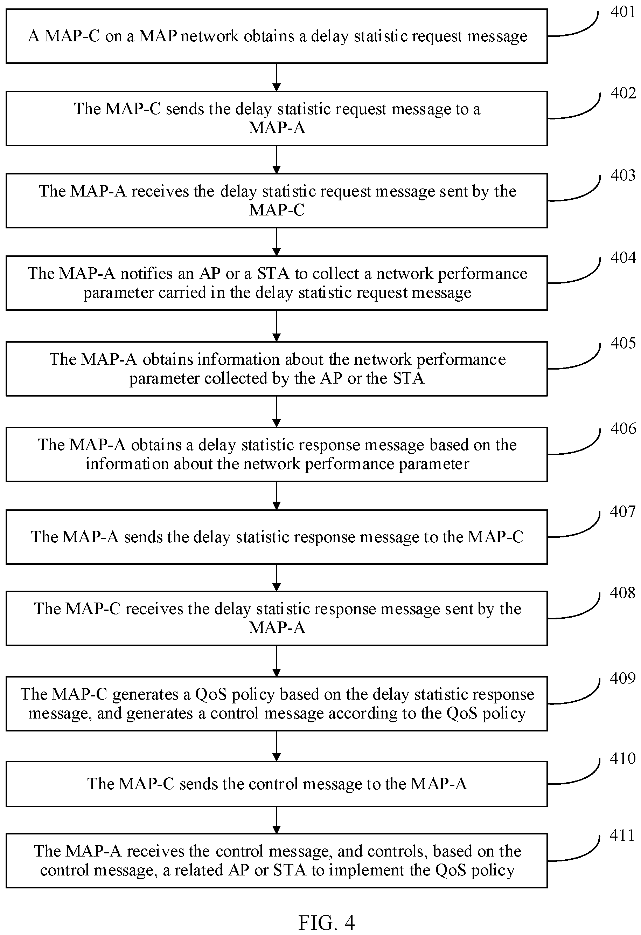

FIG. 4 is a flowchart of an access control method according to an embodiment of the present disclosure. The method is applied to a MAP network, and includes the following steps.

Step 401: A MAP-C on the MAP network obtains a delay statistic request message.

For the delay statistic request message, refer to the foregoing description. Details are not described herein again.

Step 402: The MAP-C sends the delay statistic request message to a MAP-A.

The delay statistic request message is sent in a form of a CMDU. Refer to the foregoing description. Details are not described herein again.

Step 403: The MAP-A receives the delay statistic request message sent by the MAP-C.

Step 404: The MAP-A notifies an AP or a STA to collect a network performance parameter carried in the delay statistic request message.

The AP or the STA is an AP or a STA associated with a BSS in the delay statistic request message.

Step 405: The MAP-A obtains information about the network performance parameter collected by the AP or the STA.

Step 406: The MAP-A obtains a delay statistic response message based on the information about the network performance parameter.

The information about the network performance parameter is the information about the network performance parameter obtained by the MAP-A in step 405.

Step 407: The MAP-A sends the delay statistic response message to the MAP-C.

Step 408: The MAP-C receives the delay statistic response message sent by the MAP-A.

It should be noted that values indicated by information about an average delay, a delay variation, and a delay variance in the information about the network performance parameter carried in the delay statistic response message may be one of the following examples, or may be measured in another method. This is not specifically limited in the present disclosure.

Example 1: Values corresponding to the average delay, the delay variation, and the delay variance may be values of average delays, delay variations, and delay variances that are measured by different nodes (for example, a BH-STA, an FH-AP, or a STA) that report the network performance parameter. The MAP-C may calculate a total average delay, a total delay variation, and a total delay variance on a link based on values of average delays, delay variations, and delay variances that are reported by all nodes on the link.

Example 2: Write, into a reserved field in a CMDU packet that reports parameters including the average delay, the delay variation, and the delay variance, information about a time point at which the CMDU passes through each node. The MAP-C calculates, based on the information about the time point, a total average delay, a total delay variation, and a total delay variance of the link through which the CMDU passes.

Example 3: A value corresponding to each of the average delay, the delay variation, and the delay variance may be a sum of parameter values on a direct or indirect connection path between the MAP-C and a BH-STA, an FH-AP, or a STA. For example, if the connection path between the STA and the MAP-C further includes a MAP-A1 and a MAP-A2, the average delay is a sum of average delays between the STA and the MAP-PI, the MAP-A1 and the MAP-A2, and the MAP-A2 and the STA. The delay variation and the delay variance are similar, and details are not described.

Step 409: The MAP-C generates a QoS policy based on the delay statistic response message, and generates a control message according to the QoS policy.

In a possible implementation:
Before step 409 is performed, the method may further include:

Step 1: A user logs in to a configuration interface related to the MAP-C on the MAP network through an APP, and performs QoS-related setting, to obtain target QoS. The setting may be setting a priority of data transmission, for example, setting a voice call to a highest priority.

Optionally, step 409 includes: generating the QoS policy based on the target QoS and the delay statistic response message.

For example, when a delay requirement in the target QoS is relatively high, and a delay-related network performance parameter obtained based on the delay statistic response message cannot meet the delay requirement in the target QoS, a mapping relationship between a DSCP and a UP and an AC access parameter that correspond to the data transmission are generated and adjusted, so that the data transmission meets the delay requirement in the target QoS.

Optionally, the QoS policy may be one of the following QoS policies:
Policy 1: Optimize the mapping relationship between the DSCP and the UP.
Policy 2: Optimize the AC access parameter, such as AIFS, CWmin, CWmax, and a TXOP limit.
Policy 3: Group STAs and associate the STAs with a plurality of BSSs virtualized on the FH-AP. Different access parameters may be configured for different virtual BSSs. To be specific, the STAs are allocated through virtualization on the AP.
Policy 4: Connect the BH-STA to different FH-APs to optimize a path of a backhaul link.
Policy 5: Notify, based on a received signal strength indication (RSSI, Received Signal Strength Indication) and STA capability-related information, some STAs to associate with other MAP-As, and let the other MAP-As increase transmit power or adjust an operating channel.
Policy 6: The MAP network rejects association with LegacySTA, where a network protocol version supported by the LegacySTA is an earlier version of a network protocol version supported by the FH-AP.

For example, the control message includes but is not limited to the following messages:

QoS map message: The optimized mapping relationship between the DSCP and the UP is notified to the MAP-A through the QoS map message.

EDCA parameter message: The optimized access parameter is notified to the MAP-A through the EDCA parameter message.

Step 410: The MAP-C sends the control message to the MAP-A.

Step 411: The MAP-A receives the control message, and controls, based on the control message, a related AP or STA to implement the QoS policy.

Optionally, the AP or STA may be an FH-AP or a BH-STA.

For example, step 411 includes but is not limited to the following operations:
The related AP or STA maps the DSCP to the UP based on the QoS map message.

The related AP or STA configures the access parameter based on the EDCA parameter message.

In the present disclosure, the MAP-C on the MAP network sends the control message to the MAP-A on the MAP network, and indicates, through the control message, the MAP-A to configure the mapping relationship between the DSCP and the UP and/or configure the access parameter, to optimize a network configuration, improve network performance, meet a QoS requirement of a user service, and improve user experience.

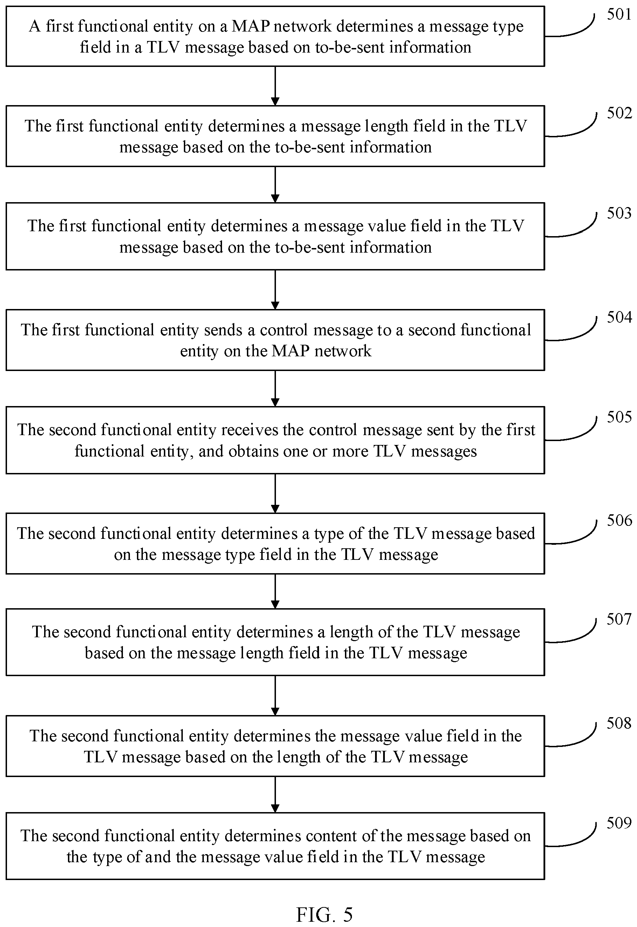

FIG. 5 is a flowchart of an access control method according to an embodiment of the present disclosure. The method is applied to a MAP network, and includes the following steps.

Step 501: A first functional entity on the MAP network determines a message type field in a TLV message based on to-be-sent information.

Optionally, the TLV message includes at least one of the following messages:
a first message, a second message, a third message, and a fourth message.

For example, the TLV message includes at least one of the following messages:
a delay statistic request message, a QoS map message, an EDCA parameter message, and a delay statistic response message.

For a method for determining the message type field in the TLV message based on the to-be-sent information, refer to Table 14 or Table 15 and related descriptions thereof, and details are not described herein again.

Step 502: The first functional entity determines a message length field in the TLV message based on the to-be-sent information.

Refer to the foregoing description. Details are not described again.

Step 503: The first functional entity determines a message value field in the TLV message based on the to-be-sent information.

Refer to the foregoing description. Details are not described again.

Step 504: The first functional entity sends a control message to a second functional entity on the MAP network, where the control message includes one or more TLV messages.

Optionally, the first functional entity is a MAP-C, and the second functional entity is a MAP-A. Alternatively, the first functional entity is a MAP-A, and the second functional entity is a MAP-C.

Step 505: The second functional entity receives the control message sent by the first functional entity, and obtains the one or more TLV messages.

Step 506: The second functional entity determines a type of the TLV message based on the message type field in the TLV message.

Step 507: The second functional entity determines a length of the TLV message based on the message length field in the TLV message.

Step 508: The second functional entity determines the message value field in the TLV message based on the length of the TLV message.

Step 509: The second functional entity determines content of the message based on the type of and the message value field in the TLV message.

Specific content of control information notified by the MAP-C to the MAP-A through the TLV message may be obtained from the content of the message.

According to this embodiment of the present disclosure, transmission of the one or more TLV messages in the control message is more efficient by using a TLV message format.

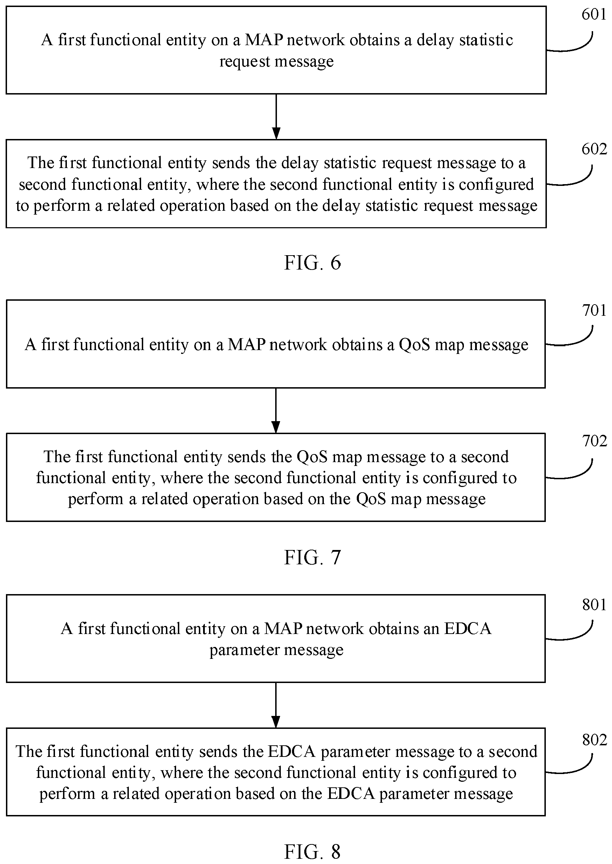

FIG. 6 is a flowchart of a transmission method according to an embodiment of the present disclosure. The method is applied to a MAP network, and includes the following steps.

Step 601: A first functional entity on the MAP network obtains a delay statistic request message.

The delay statistic request message is determined based on one or more of the following information: message type information, message length information, information about a target BSS, information about a data transmission type, identification information of a network performance parameter, a reporting interval, a message validity period, STA quantity information, and STA identification information.

Optionally, the first functional entity is a MAP-C.

Step 602: The first functional entity sends the delay statistic request message to a second functional entity, where the second functional entity is configured to perform a related operation based on the delay statistic request message.

For example, the MAP-C determines the delay statistic request message by performing step 601, and sends the delay statistic request message to a MAP-A.

The MAP-A receives the delay statistic request message, and collects the network performance parameter based on content of the delay statistic request message.

The network performance parameter includes but is not limited to one or more of the following parameters: an average delay, a delay variation, a packet loss rate, a packet error rate, and a delay variance.

In a possible implementation, a TLV format of the delay statistic request message is shown in Table 3, as described above, and details are not described again.

In this embodiment of the present disclosure, the format of the delay statistic request message is designed, so that transmission of the delay statistic request message in a control message is more efficient. In addition, the network performance parameter is collected on the MAP network through the delay statistic request message.

FIG. 7 is a flowchart of an access control method according to an embodiment of the present disclosure. The method is applied to a MAP network, and includes the following steps.

Step 701: A first functional entity on the MAP network obtains a QoS map message.

The QoS map message is determined based on one or more of the following information: message type information, message length information, information about a target BSS, information about a mapping relationship between a DSCP and a UP, STA quantity information, and STA identification information.

Optionally, the first functional entity is a MAP-C.

Step 702: The first functional entity sends the QoS map message to a second functional entity, where the second functional entity is configured to perform a related operation based on the QoS map message.

For example, the MAP-C determines the QoS map message by performing step 701, and sends the QoS map message to a MAP-A.

The MAP-A receives the QoS map message, and controls, based on content of the QoS map message, an FH-AP, a BH-STA, and the STA to configure the mapping relationship between the DSCP and the UP.

In a possible implementation, a TLV format of the QoS map message is shown in Table 8, as described above, and details are not described again.

In this embodiment of the present disclosure, the format of the QoS map message is designed, so that transmission of the QoS map message in a control message is more efficient. In addition, the mapping relationship between the DSCP and the UP is configured through the QoS map message, to optimize a network configuration, improve network performance, meet a QoS requirement of a user service, and improve user experience.

FIG. 8 is a flowchart of an access control method according to an embodiment of the present disclosure. The method is applied to a MAP network, and includes the following steps.

Step 801: A first functional entity on the MAP network obtains an EDCA parameter message.

The EDCA parameter message is determined based on one or more of the following information: message type information, message length information, information about a target BSS, information about an access parameter, STA quantity information, and STA identification information.

Optionally, the first functional entity is a MAP-C.

Step 802: The first functional entity sends the EDCA parameter message to a second functional entity, where the second functional entity is configured to perform a related operation based on the EDCA parameter message.

For example, the MAP-C determines the EDCA parameter message by performing step 801, and sends the EDCA parameter message to a MAP-A.

The MAP-A receives the EDCA parameter message, and configures, based on content of the EDCA parameter message, an EDCA parameter used by an FH-AP and the STA.

In a possible implementation, a TLV format of the EDCA parameter message is shown in Table 11, as described above, and details are not described again.

In this embodiment of the present disclosure, the format of the EDCA parameter message is designed, so that transmission of the EDCA parameter message in a control message is more efficient. In addition, the access parameter is configured through the EDCA parameter message, to optimize a network configuration, improve network performance, meet a QoS requirement of a user service, and improve user experience.

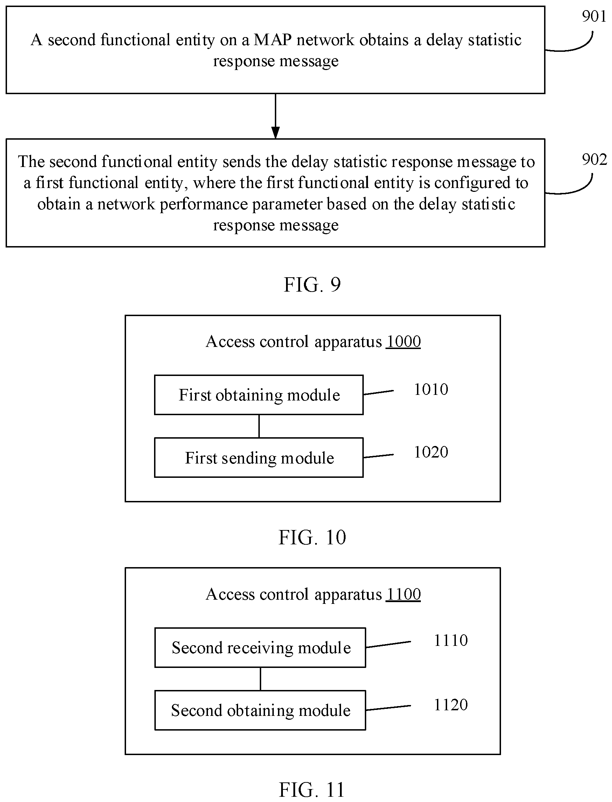

FIG. 9 is a flowchart of an access control method according to an embodiment of the present disclosure. The method is applied to a MAP network, and includes the following steps.

Step 901: A second functional entity on the MAP network obtains a delay statistic response message.

The delay statistic response message is determined based on one or more of the following information: message type information, message length information, information about a target BSS, information about a data transmission type, information about a network performance parameter, STA quantity information, and STA identification information.

Optionally, the second functional entity is a MAP-A.

Step 902: The second functional entity sends the delay statistic response message to a first functional entity, where the first functional entity is configured to obtain the network performance parameter based on the delay statistic response message.

The MAP-A determines the delay statistic response message by performing step 901, and sends the delay statistic response message to a MAP-C.

The MAP-C receives the delay statistic response message, and obtains the network performance parameter based on the delay statistic response message. Further, the MAP-C evaluates, based on the obtained network performance parameter, whether a current network configuration meets a QoS requirement of a user service, and if the current network configuration does not meet the QoS requirement of the user service, performs optimization processing.

In a possible implementation, a TLV format of the delay statistic response message is shown in Table 12, as described above, and details are not described again.

In this embodiment of the present disclosure, the format of the delay statistic response message is designed, so that transmission of the delay statistic response message in a control message is more efficient. In addition, the network performance parameter is collected on the WAP network through the delay statistic response message.

The following describes apparatus embodiments of the present disclosure. For details that are not described in detail in the apparatus embodiments, refer to the foregoing one-to-one corresponding method embodiments.

FIG. 10 is a block diagram of an access control apparatus 1000 according to an embodiment of the present disclosure. The access control apparatus 1000 includes a first obtaining module 1010 and a first sending module 1020.

The first obtaining module 1010 is configured to obtain control information, where the control information is used to indicate a second functional entity on the MAP network to perform a related operation based on the control information.

The first sending module 1020 is configured to send a control message to the second functional entity on the MAP network.

The control message includes one or more first TLV messages, and the one or more first TLV messages are used to carry same or different control information content.

Optionally, the access control apparatus 1000 further includes a first receiving module.

The first receiving module is configured to receive a response message sent by the second functional entity.

The response message is used by the second functional entity to respond to the control message, and the response message includes one or more second TLV messages.

In the present disclosure, a first functional entity on the MAP network sends the control message to the second functional entity on the MAP network. Because the control message includes the one or more first TLV messages used to carry the control information, the second functional entity can perform the related operation based on the control information. In this way, the first functional entity controls the second functional entity, to control a plurality of access points on the MAP network, so that control information for the plurality of access points is sent more efficiently.

FIG. 11 is a block diagram of an access control apparatus 1100 according to an embodiment of the present disclosure. The access control apparatus 1100 includes a second receiving module 1110 and a second obtaining module 1120.

The second receiving module 1110 is configured to receive a control message sent by a first functional entity.

The second obtaining module 1120 is configured to obtain one or more TLV messages based on the control message.

Optionally, the access control apparatus 1100 further includes:
a second sending module, configured to send a response message.

In the present disclosure, the first functional entity on a MAP network sends the control message to a second functional entity on the MAP network, where the control message includes the one or more first TLV messages, so that the first functional entity controls the second functional entity. According to the technical solution provided in the present disclosure, a plurality of access points can be controlled on the MAP network, so that control information for the plurality of access points can be sent more efficiently.

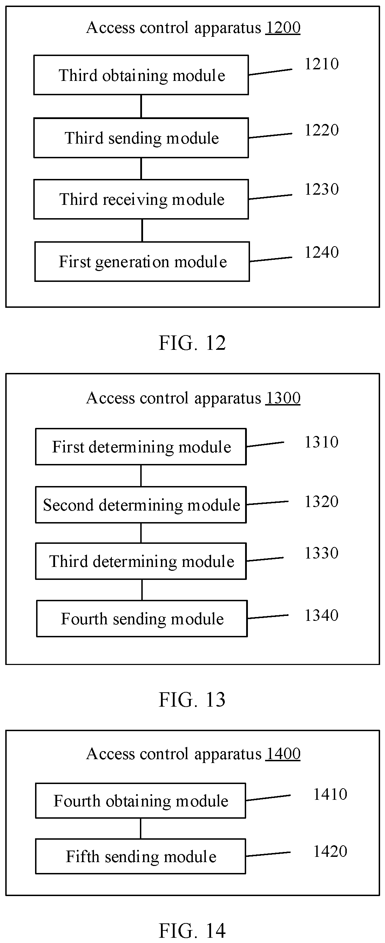

FIG. 12 is a block diagram of an access control apparatus 1200 according to an embodiment of the present disclosure. The access control apparatus 1200 includes a third obtaining module 1210, a third sending module 1220, a third receiving module 1230, and a first generation module 1240.

The third obtaining module 1210 is configured to obtain a delay statistic request message.

The third sending module 1220 is configured to send the delay statistic request message to a MAP-A.

The third receiving module 1230 is configured to receive a delay statistic response message sent by the MAP-A.

The first generation module 1240 is configured to generate a QoS policy based on the delay statistic response message, and generate a control message based on the QoS policy.

The third sending module 1220 is further configured to send the control message to the MAP-A.

In the present disclosure, a first functional entity on a MAP network sends control information to a second functional entity on the MAP network, where the control information includes one or more first TLV messages, so that the first functional entity controls the second functional entity. According to the technical solution provided in the present disclosure, a plurality of access points can be controlled on the MAP network, so that control information for the plurality of access points can be sent more efficiently. Further, an optimized access parameter or mapping relationship between a DSCP and a UP is sent to the second functional entity, to optimize a network configuration and further improve network performance.

FIG. 13 is a block diagram of an access control apparatus 1300 according to an embodiment of the present disclosure. The access control apparatus 1300 includes a first determining module 1310, a second determining module 1320, a third determining module 1330, and a fourth sending module 1340.

The first determining module 1310 is configured to determine a message type field in a TLV message based on to-be-sent information.

The second determining module 1320 is configured to determine a message length field in the TLV message based on the to-be-sent information.

The third determining module 1330 is configured to determine a message value field in the TLV message based on the to-be-sent information.

The fourth sending module 1340 is configured to send a control message to a second functional entity on a MAP network.

According to this embodiment of the present disclosure, transmission of one or more TLV messages in the control message is more efficient by using a TLV message format.

FIG. 14 is a block diagram of an access control apparatus 1400 according to an embodiment of the present disclosure. The access control apparatus 1400 includes a fourth obtaining module 1410.

The fourth obtaining module 1410 is configured to obtain a delay statistic request message.

The delay statistic request message is determined based on one or more of the following information: message type information, message length information, information about a target BSS, information about a data transmission type, identification information of a network performance parameter, a reporting interval, a message validity period, STA quantity information, and STA identification information.

Optionally, the access control apparatus 1300 is a MAP-C.

A fifth sending module 1420 is configured to send the delay statistic request message to a second functional entity, where the second functional entity is configured to perform a related operation based on the delay statistic request message.

In this embodiment of the present disclosure, a format of the delay statistic request message is designed, so that transmission of the delay statistic request message in a control message is more efficient. In addition, the network performance parameter is collected on a MAP network through the delay statistic request message.

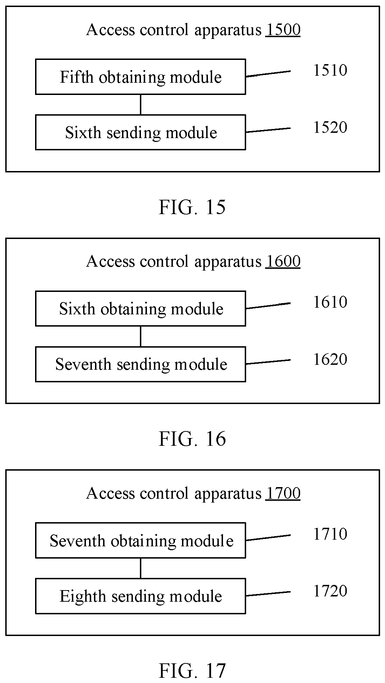

FIG. 15 is a block diagram of an access control apparatus 1500 according to an embodiment of the present disclosure. The access control apparatus 1500 includes a fifth obtaining module 1510.

The fifth obtaining module 1510 is configured to obtain a QoS map message.

The QoS map message is determined based on one or more of the following information: message type information, message length information, information about a target BSS, information about a mapping relationship between a DSCP and a UP, STA quantity information, and STA identification information.

Optionally, the access control apparatus 1400 is a MAP-C.

A sixth sending module 1520 is configured to send the QoS map message to a second functional entity, where the second functional entity is configured to perform a related operation based on the QoS map message.

In this embodiment of the present disclosure, a format of the QoS map message is designed, so that transmission of the QoS map message in a control message is more efficient. In addition, the mapping relationship between the DSCP and the UP is configured through the QoS map message, to optimize a network configuration, improve network performance, meet a QoS requirement of a user service, and improve user experience.

FIG. 16 is a block diagram of an access control apparatus 1600 according to an embodiment of the present disclosure. The access control apparatus 1600 includes a sixth obtaining module 1610.

The sixth obtaining module 1610 is configured to obtain an EDCA parameter message.

The EDCA parameter message is determined based on one or more of the following information: message type information, message length information, information about a target BSS, information about an access parameter, STA quantity information, and STA identification information.

Optionally, the access control apparatus 1500 is a MAP-C.

A seventh sending module 1620 is configured to send the EDCA parameter message to a second functional entity, where the second functional entity is configured to perform a related operation based on the EDCA parameter message.

In this embodiment of the present disclosure, a format of the EDCA parameter message is designed, so that transmission of the EDCA parameter message in a control message is more efficient. In addition, the access parameter is configured through the EDCA parameter message, to optimize a network configuration, improve network performance, meet a QoS requirement of a user service, and improve user experience.

FIG. 17 is a block diagram of an access control apparatus 1700 according to an embodiment of the present disclosure. The access control apparatus 1700 includes a seventh obtaining module 1710.

The seventh obtaining module 1710 is configured to obtain a delay statistic response message.

The delay statistic response message is determined based on one or more of the following information: message type information, message length information, information about a target BSS, information about a data transmission type, information about a network performance parameter, STA quantity information, and STA identification information.

Optionally, the access control apparatus 1600 is a MAP-C.

An eighth sending module 1720 is configured to send the delay statistic response message to a first functional entity, where the first functional entity is configured to obtain the network performance parameter based on the delay statistic response message.

In this embodiment of the present disclosure, a format of the delay statistic response message is designed, so that transmission of the delay statistic response message in a control message is more efficient. In addition, the network performance parameter is collected on a WAP network through the delay statistic response message.

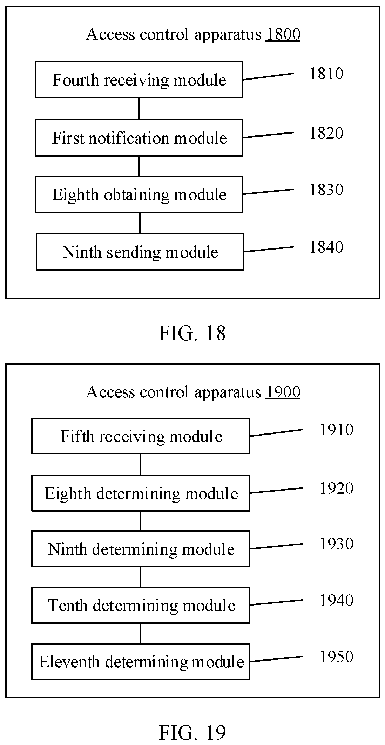

FIG. 18 is a block diagram of an access control apparatus 1800 according to an embodiment of the present disclosure. The access control apparatus 1800 includes a fourth receiving module 1810, a first notification module 1820, an eighth obtaining module 1830, and a ninth sending module 1840.

The fourth receiving module 1810 is configured to receive a delay statistic request message sent by a MAP-C.

The first notification module 1820 is configured to notify an AP or a STA to collect a network performance parameter included in the delay statistic request message.

The eighth obtaining module 1830 is configured to obtain, by a MAP-A, information about the network performance parameter collected by the AP or the STA, and further configured to obtain a delay statistic response message based on the information about the network performance parameter.

The ninth sending module 1840 is configured to send the delay statistic response message to the MAP-C.

The fourth receiving module 1810 is further configured to receive a control message sent by the MAP-A, and control, based on the control message, a related AP or STA to implement a QoS policy.

In the present disclosure, a first functional entity on a MAP network sends control information to a second functional entity on the MAP network, where the control information includes one or more first TLV messages, so that the first functional entity controls the second functional entity. According to the technical solution provided in the present disclosure, a plurality of access points can be controlled on the MAP network, so that control information for the plurality of access points can be sent more efficiently. Further, an optimized access parameter or mapping relationship between a DSCP and a UP is sent to the second functional entity, to optimize a network configuration and further improve network performance.

FIG. 19 is a block diagram of an access control apparatus 1900 according to an embodiment of the present disclosure. The access control apparatus 1900 includes a fifth receiving module 1910, an eighth determining module 1920, a ninth determining module 1930, a tenth determining module 1940, and an eleventh determining module 1950.

The fifth receiving module 1910 is configured to receive a control message sent by a first functional entity on a MAP network.

The eighth determining module 1920 is configured to determine a type of a TLV message based on a message type field in the TLV message.

The ninth determining module 1930 is configured to determine a length of the TLV message based on a message length field in the TLV message.

The tenth determining module 1940 is configured to determine a message value field in the TLV message based on the length of the TLV message.

The eleventh determining module 1950 is configured to determine content of the message based on the type of and the message value field in the TLV message.

According to this embodiment of the present disclosure, transmission of one or more TLV messages in the control message is more efficient by using a TLV message format.

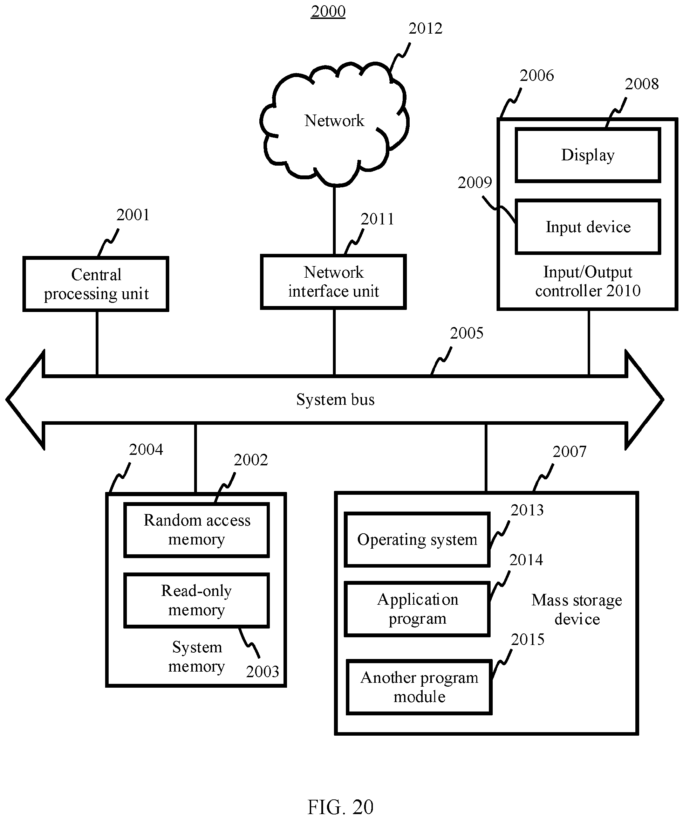

FIG. 20 is a schematic structural diagram of an access control apparatus according to an embodiment of the present disclosure. The apparatus may be a server or a terminal, and specifically:

The computing system 2000 includes a central processing unit (CPU) 2001, a system memory 2004 including a random access memory (RAM) 2002 and a read-only memory (ROM) 2003, and a system bus 2005 connecting the system memory 2004 and the central processing unit 2001. The computing system 2000 further includes a basic input/output system (I/O system) 2006 helping transmit information between components in a computer, and a mass storage device 2007 configured to store an operating system 2013, an application program 2014, and another program module 2015.

The basic input/output system 2006 includes a display 2008 configured to display information and an input device 2009, such as a mouse or a keyboard, used by a user to enter information. The display 2008 and the input device 2009 are connected to the central processing unit 2001 through an input/output controller 2010 connected to the system bus 2005. The basic input/output system 2006 may further include the input/output controller 2010, configured to receive and process input from a plurality of other devices, such as a keyboard, a mouse, or an electronic stylus. Similarly, the input/output controller 2010 further provides output to a display, a printer, or another type of output device.

The mass storage device 2007 is connected to the central processing unit 2001 through a mass storage controller (not shown) connected to the system bus 2005. The mass storage device 2007 and a computer-readable medium associated with the mass storage device 2007 provide non-volatile storage for the computing system 2000. In other words, the mass storage device 2007 may include a computer-readable medium (not shown) such as a hard disk or a CD-ROM driver.

Without loss of generality, the computer-readable medium may include a computer storage medium and a communications medium. The computer storage medium includes volatile, nonvolatile, movable, and unmovable media that are configured to store information such as a computer-readable instruction, a data structure, a program module, or other data and that are implemented in any method or technology. The computer storage medium includes a RAM, a ROM, an EPROM, an EEPROM, a flash memory or another solid-state storage technology, a CD-ROM, a DVD or another optical storage, a cassette, a magnetic tape, a magnetic disk storage, or another magnetic storage device. Certainly, a person skilled in the art may know that the computer storage medium is not limited to the foregoing several types. The system memory 2004 and the mass storage device 2007 may be collectively referred to as a memory.

According to the embodiments of the present disclosure, the computing system 2000 may be further connected to a remote computer on a network through the network such as the internet to run. In other words, the computing system 2000 may be connected to a network 2012 through a network interface unit 2011 connected to the system bus 2005, or may be connected to another type of network or a remote computer system (not shown) through the network interface unit 2011.

The memory further includes one or more programs. The one or more programs are stored in the memory and configured to be executed by the CPU. The one or more programs include an instruction used to perform the access control method provided in any one of FIG. 3 to FIG. 11.

An embodiment of the present disclosure further provides a non-transitory computer-readable storage medium. When an instruction in the storage medium is executed by a processor in a computing system, the computing system is enabled to perform the access control method provided in any one of FIG. 3 to FIG. 9.

A computer program product including an instruction is provided. When the computer program product runs on a computer, the computer is enabled to execute the instruction for performing the access control method provided in any one of FIG. 3 to FIG. 9.

All or some of the foregoing embodiments may be implemented by using software, hardware, firmware, or any combination thereof. When the software is used for implementation, all or some of the embodiments may be implemented in a form of a computer program product. The computer program product includes one or more computer instructions. When the computer program instructions are loaded and executed on an apparatus, all or some of the procedures or functions according to the embodiments of the present invention are generated. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial optical cable, an optical fiber, or a digital subscriber line) or wireless (for example, infrared, radio, or microwave) manner. The computer-readable storage medium may be any usable medium accessible by the apparatus, or a data storage device, such as a server or a data center, integrating one or more usable media. The usable medium may be a magnetic medium (for example, a floppy disk, a hard disk, or a magnetic tape), an optical medium (for example, a digital video disk (Digital Video Disk, DVD)), or a semiconductor medium (for example, a solid-state drive).

The sequence numbers of the foregoing embodiments of this application are merely for illustrative purposes, and are not intended to indicate priorities of the embodiments.

The foregoing descriptions are merely optional embodiments of this application, but are not intended to limit this application. Any modification, equivalent replacement, or improvement made without departing from the spirit and principle of this application should fall within the protection scope of this application.

## Claims

1. An access control method, wherein the method is applied to a first functional entity on a multi-access point MAP network, and the method comprises:
obtaining control information, wherein the control information is used to indicate a second functional entity on the MAP network to perform a related operation based on the control information; and
sending a control message to the second functional entity, wherein the control message comprises one or more first type-length-value TLV messages, and the first TLV messages carry the control information.

2. The method according to claim 1, wherein the first TLV messages comprise a first message used to indicate the second functional entity to report a network performance parameter, the first message carries identification information of the network performance parameter, and the identification information of the network performance parameter is used to indicate the network performance parameter to be reported.

3. The method according to claim 2, wherein the first message further carries at least one of the following information:
message type information, message length information, information about a target basic service set BSS, information about a data transmission type, a reporting interval, a message validity period, information about a quantity of third functional entities, and identification information of the third functional entity, wherein the third functional entity is a functional entity associated with the target BSS.

4. The method according to any one of claims 1 to 3, wherein the method further comprises:
receiving a response message sent by the second functional entity, wherein the response message comprises one or more second TLV messages, and the second TLV messages carry information about the network performance parameter.

5. The method according to claim 4, wherein the second TLV messages further carry at least one of the following information:
message type information, message length information, the information about the target basic service set BSS, the information about the data transmission type, the information about the quantity of third functional entities, and the identification information of the third functional entity, wherein the third functional entity is a functional entity associated with the target BSS.

6. The method according to claim 1, wherein the first TLV messages comprise a second message used to indicate the second functional entity to configure a mapping relationship between a differentiated service code point DSCP and a user priority UP, and the second message carries information about the mapping relationship between the DSCP and the UP.

7. The method according to claim 6, wherein the second message further carries at least one of the following information:
message type information, message length information, information about a target basic service set BSS, information about a quantity of third functional entities, and identification information of the third functional entity, wherein the third functional entity is a functional entity associated with the target BSS.

8. The method according to claim 1, wherein the first TLV messages comprise a third message used to indicate the second functional entity to configure an access parameter, and the third message carries configuration information of the access parameter.

9. The method according to claim 8, wherein the third message further carries at least one of the following information:
message type information, message length information, information about a target basic service set BSS, information about a quantity of third functional entities, and identification information of the third functional entity, wherein the third functional entity is a functional entity associated with the target BSS.

10. The method according to any one of claims 2 to 5, wherein the network performance parameter comprises at least a statistical average delay, a delay variation, and a packet loss rate.

11. The method according to any one of claims 3 to 5, 7, or 9, wherein the information about the target BSS is a basic service set identifier BSSID of the target BSS.

12. The method according to any one of claims 3 to 5, 7, or 9, wherein the identification information of the third functional entity is a medium access control MAC address of the third functional entity.

13. The method according to any one of claims 3 to 5, wherein the information about the data transmission type is information about an access category AC type, and the AC type comprises AC_BK, AC_BE, AC_VI, and AC_VO; or
the information about the data transmission type is information about a user priority UP type, and the UP type comprises a UP 0, a UP 1, a UP 2, a UP 3, a UP 4, a UP 5, a UP 6, and a UP 7.

14. An access control method, wherein the method is applied to a second functional entity on a multi-access point MAP network, and the method comprises:
receiving a control message sent by a first functional entity on the MAP network; and
obtaining one or more first type-length-value TLV messages based on the control message, wherein the first TLV messages carry control information, and the control information is used to indicate the second functional entity to perform a related operation based on the control information.

15. The method according to claim 14, wherein the first TLV messages comprise a first message used to indicate the second functional entity to report a network performance parameter, the first message carries identification information of the network performance parameter, and the identification information of the network performance parameter is used to indicate the network performance parameter to be reported.

16. The method according to claim 15, wherein the first message further carries at least one of the following information:
message type information, message length information, information about a target basic service set BSS, information about a data transmission type, a reporting interval, a message validity period, information about a quantity of third functional entities, and identification information of the third functional entity, wherein the third functional entity is a functional entity associated with the target BSS.

17. The method according to claims 14 to 16, wherein the method further comprises:
sending a response message to the first functional entity, wherein the response message comprises one or more second TLV messages, and the second TLV messages carry information about the network performance parameter.

18. The method according to claim 17, wherein the second TLV messages further carry at least one of the following information:
message type information, message length information, the information about the target basic service set BSS, the information about the data transmission type, the information about the quantity of third functional entities, and the identification information of the third functional entity, wherein the third functional entity is a functional entity associated with the target BSS.

19. The method according to claim 14, wherein the first TLV messages comprise a second message used to indicate the second functional entity to configure a mapping relationship between a differentiated service code point DSCP and a user priority UP, and the second message carries information about the mapping relationship between the DSCP and the UP.

20. The method according to claim 19, wherein the second message further carries at least one of the following information:
message type information, message length information, information about a target basic service set BSS, information about a quantity of third functional entities, and identification information of the third functional entity, wherein the third functional entity is a functional entity associated with the target BSS.

21. The method according to claim 14, wherein the first TLV messages comprise a third message used to indicate the second functional entity to configure an access parameter, and the third message carries configuration information of the access parameter.

22. The method according to claim 21, wherein the third message further carries at least one of the following information:
message type information, message length information, information about a target basic service set BSS, information about a quantity of third functional entities, and identification information of the third functional entity, wherein the third functional entity is a functional entity associated with the target BSS.

23. The method according to any one of claims 16 to 18, wherein the network performance parameter comprises at least a statistical average delay, a delay variation, and a packet loss rate.

24. The method according to any one of claims 16 to 18, 20, or 22, wherein the information about the target BSS is a basic service set identifier BSSID of the target BSS.

25. The method according to any one of claims 16 to 18, 20, or 22, wherein the identification information of the third functional entity is a medium access control MAC address of the third functional entity.

26. The method according to any one of claims 16 to 18, wherein the information about the data transmission type is information about an access category AC type, and the AC type comprises AC BK, AC BE, AC_VI, and AC VO; or
the information about the data transmission type is information about a user priority UP type, and the UP type comprises a UP 0, a UP 1, a UP 2, a UP 3, a UP 4, a UP 5, a UP 6, and a UP 7.

27. An access control apparatus, wherein the apparatus is applied to a first functional entity on a multi-access point MAP network, and the apparatus comprises:
a first obtaining module, configured to obtain control information, wherein the control information is used to indicate a second functional entity on the MAP network to perform a related operation based on the control information; and
a first sending module, configured to send a control message to the second functional entity, wherein the control message comprises one or more first type-length-value TLV messages, and the first TLV messages carry the control information.

28. An access control apparatus, wherein the apparatus is applied to a second functional entity on a multi-access point MAP network, and the apparatus comprises:
a second receiving module, configured to receive a control message sent by a first functional entity on the MAP network; and
a second obtaining module, configured to obtain one or more first type-length-value TLV messages based on the control message, wherein the first TLV messages carry control information, and the control information is used to indicate the second functional entity to perform a related operation based on the control information.

29. An access control apparatus, wherein the apparatus comprises a processor and a memory, the memory stores at least one instruction, and the processor loads and executes the instruction to implement the access control method according to any one of claims 1 to 26.

30. A computer-readable storage medium, wherein the storage medium stores at least one instruction, and a processor loads and executes the instruction to implement the access control method according to any one of claims 1 to 26.
